# EUROPEAN PATENT APPLICATION

(11) **EP 1 898 030 A2**
(43) Date of publication of application: **12.03.2008**
(21) Application number: 07114938.9
(22) Date of filing: 24.08.2007
(51) Int. Cl.: E04H 4/00

(54) **Modular Pool Construction**

(30) Priority: 29.08.2006 GB 0616941
(71) Applicant: Escar (UK) Limited, CO8 5JR Bures St. Mary, Suffolk (GB)
(72) Inventor: Cox, John, Bures St. Mary, Suffolk CO8 5JR (GB)
(74) Representative: Sanderson, James L.C.

(57) **Abstract**

A modular pool construction kit comprising a plurality of interlocking segments (24, 60) that may assembled to form a pool of any desired shape, with each segment being formed from a laminate material having a fibreglass backing layer (20) to which a composite mixture (21) of resin and stone fragments is bonded. The segments may have base portions (25) forming the bottom of a pool and wall portions (26, 27, 28) forming a side wall (29) of the pool. The segments may be moulded sheets with interconnecting edges. The present invention also provides a method of constructing a pool from multiple segments comprising arranging the segments adjacent each other and interlocking them in the desired shape to form a watertight pool.

## Description

The present invention provides a modular pool construction kit and a method of constructing pools from modular components.

As used herein the term "pool" predominantly refers to an ornamental garden pool or pond, but incorporates any equivalent water-filled body including water features and swimming pools.

Stone ornamental pools and water features are very popular, due to their pleasing aesthetic appearance, but they suffer from several significant disadvantages. If they are constructed from authentic stone they are both incredibly heavy and very expensive, as they must be assembled from expensive materials that are very hard to transport to and on site. Further, assembly of such an authentic stone pool is a job for highly skilled artisans whose skills are rare and expensive. Cheaper stone substitutes such as concrete can be used but these also require slow construction and result in a pool of significantly less visual appeal. Attempts have been made to make ornamental pools that emulate stone out of pre-moulded plastics which can be installed on site ready prepared. However the surface appearance of the plastic is not realistic in its simulation of stone and more importantly only very small pools that can be moulded and transported as complete items can be made in this way.

As such it is an aim of the present invention to provide a solution to these problems and offer a way by which visually appealing or authentic looking pools may be constructed easily, swiftly and cost effectively. A specific aim is to provide a modular kit that may be used to construct a pool from a range of different prefabricated segments that simply need to be assembled on site to erect a pool of the desired shape.

Therefore according to the present invention there is provided a modular pool construction kit comprising a plurality of interlocking segments that can be assembled to form a pool of a desired shape, each segment being formed from a laminate material having a fibreglass backing layer to which a composite mixture of resin and stone fragments is bonded.

In general a pool will comprise a base, which may be generally flat and a side wall that upstands to a certain degree around the base to define a water retaining region. The top will generally be open to the air so that the water in the pool may be seen and enjoyed. The outer face of the wall of the pool will usually be visible as will the top of the wall and the upper part of the inner face. The base will usually be invisible or obscured when the pool in full.

It is preferred that at least some of the segments are shaped to define a base portion and a wall portion, the base portion forming when assembled a part of a base or bottom of the pool, and the wall portion when assembled forming a part of a generally vertical side wall of the pool. The base portions of the segments together form the base of the pool and the wall portions form the side wall when all segments are interconnected.

The laminate material from which the segments are formed is lightweight but very strong, it can be moulded and swiftly cured in the desired shape and the resin and stone fragment composite imparts an appearance very similar to real stone. The segments may be formed from moulded sheets of the laminate material or the laminate may be formed in the process of making the segments by combining the parts in a mould.

For efficient construction of a pool using the modular pool construction kit of the present invention the segments need to be able to interconnect in an effective yet quick way during assembly. Therefore it is preferred that abutting edges of adjacent segments are provided with interconnecting means that permit the segments to be interlocked. It is desirable that the interconnecting means between adjacent segments form a water resistant seal, which may be achieved or enhanced by the provision in the join of external sealants such as those containing silicone.

The interconnecting means preferably include tongue and groove connectors on the abutting edges. One edge having a tongue that locates in a groove formed on an edge that it is brought into proximity with the one edge. Usually each segment will have a tongue along one edge and a groove along another so that as segments are assembled the tongue of one engages the groove of the next and so on. The interconnecting means may be provided on all adjacent edges, or only some. They need to be provided in enough locations to ensure structural integrity and enhance water proofing of joins.

The wall section may have an inner wall part forming the wall of the pool, an outer wall part that defines the external face of the pool and imparts a decorative profile to the pool, and a sill joining the upper edges of the inner and outer wall parts. This allows a sheet of the laminate material to form a wall that has an apparent thickness equivalent to a conventional stone pool. The outer wall parts on adjacent segments do not need to be joined in a water tight fashion but the join should desirably have minimum visual impact.

A central hub segment may be provided, which hub segment is adapted to interlock inner parts of the other segments. The inner ends of the base portion of each segment, i.e. that part that is located closest to the middle of the pool when constructed, may together define a position to locate the hub segment once other segments are in place. Preferably the inner ends together define a channel, and the hub segment which is preferably otherwise generally flat has a down turned lip which locates into the channel.

In a pool, once filed with water, the weight of the water forces segments down and outwards. The downward force is taken by the structure upon which the segments are constructed, and the walls take the outward force. It has been found that the location of the down turned lip in the channel helps to counter that.

The interconnecting means provided between the segments are preferably adapted such that the weight of water in the pool urges them to form tighter seals and improve the integrity of the pool.

According to the present invention there is also provided a method of constructing a pool from a plurality of segments, each segment being formed from a composite material having a fibreglass backing layer with a mixture of resin and stone fragments bonded thereto, the method comprising arranging the segments adjacent each other and interlocking them in the desired shape to form a watertight pool that may be filled with water.

A separate sealant material may be provided during construction in the joins between segments to improve water resistance.

The method may also include the preliminary steps of selecting from a range of differently shaped segments, a number and range of correct shaped segments so that in the subsequent steps the selected segments may be assembled into a pool of the desired overall shape. Preliminary steps could also include preparation of a generally level site to locate the pool.

In order that it may be better understood but by way of example only, the present invention will now be described in more detail with reference to the accompanying drawings in which:
**Figure 1** is cross section through a typical laminate material used to construct the segments of the present invention;
**Figure 2** is a vertical section through a segment;
**Figure 3** is a perspective view of three segments ready to be connected together;
**Figure 4** is a perspective view of the three segments in Figure 3 connected together;
**Figure 5A** is section through one embodiment of interconnecting means along the edge of the base portion of each segment;
**Figure 5B** is section through a different embodiment of interconnecting means along the edge of the base portion of each segment;
**Figure 6** is a perspective view from the inside of the pool of a part of the interconnecting means on the wall portion of the segments;
**Figure 7** is a sectional view through the interconnecting means shown in Figure 6;
**Figure 8** is a perspective view from the outside of a part of the interconnecting means in Figures 6 and 7;
**Figure 9** is a partially cut away perspective view of three segments connected together to illustrate the interconnecting means of Figures 6 to 8;
**Figure 10** is an underside view of a pool;
**Figure 11** is a simplified plan view of a circular pool;
**Figure 12** is a simplified plan view of an oval pool;
**Figure 13** is a perspective view of a semi-circular pool being constructed; and,
**Figure 14** shows the end of a rear board used in forming the semi-circular pool shown in Figure 13.

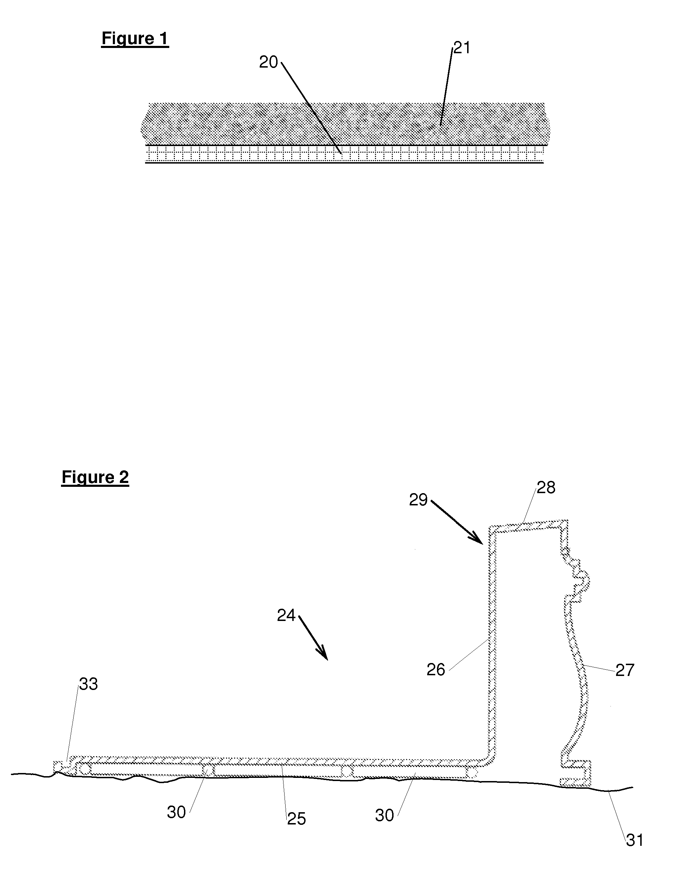

Figure 1 shows the laminate composite material from which most or all of the segments are formed. This comprises a backing layer 20 of fibreglass or GRP, on which is bonded a layer of composite 21 comprising resin and stone fragments. This material is quick to form as the resin cures fast and once cured is very strong and resistant to degradation. During manufacture the material is easy to mould into complex shapes but is light yet strong when finished. Further, the outer visible surface of the composite 21 can be treated with a chemical after moulding that will remove some of the resin from the surface. This enhances the simulation of stone on the visible parts without adversely affecting the structural integrity.

Figure 2 is a vertical section through a segment formed from the laminate material. The segment, generally indicated 24, has a base portion 25, an inner wall portion 26, an outer wall portion 27 and a sill 28 that extends between the tops of the inner and outer wall portions. The inner wall portion 26, outer wall portion 27 and a sill 28 together comprise the side wall 29, whose visible external face has a desired decorative profile. Support ribs 30 are provided on the underside of the base portion 25 and in use rest on the surface 31. Though not visible in this view the lateral edges of the base portion 25 and inner wall portion 26 have complimentary interlocking formations. The inner end of the base portion (i.e. that remote from the side wall) has a channel 33 formed therein, which channel engages with a hub segment as described in more detail later.

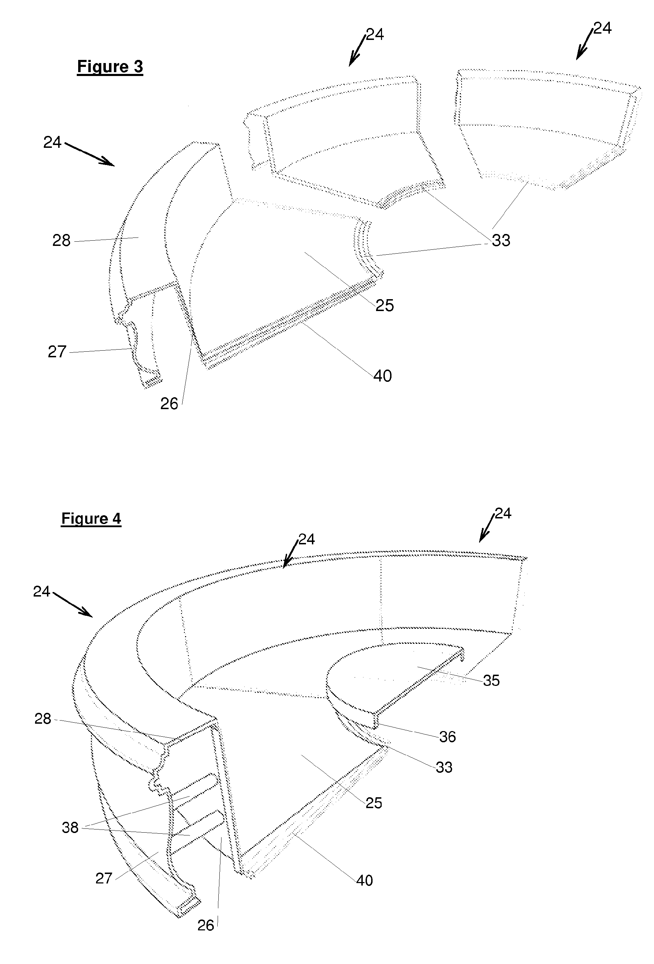

The overall shape of the desired pool governs the shape and layout of the segments required. In Figure 3, three arcuate segments are shown in position ready to form a semicircular shape. This could be used as the end of an oval pool, half of a round pool or most of a semi-circular or D-shaped pool. These arcuate segments each describe an angle of 60°. Figure 4 shows these three segments when connected together, with a semicircular hub segment 35 shown dropping into place at the centre. The hub segment 35 has a down turned lip 36 which locates into the semicircular channel formed from the channels 33 on each segment.

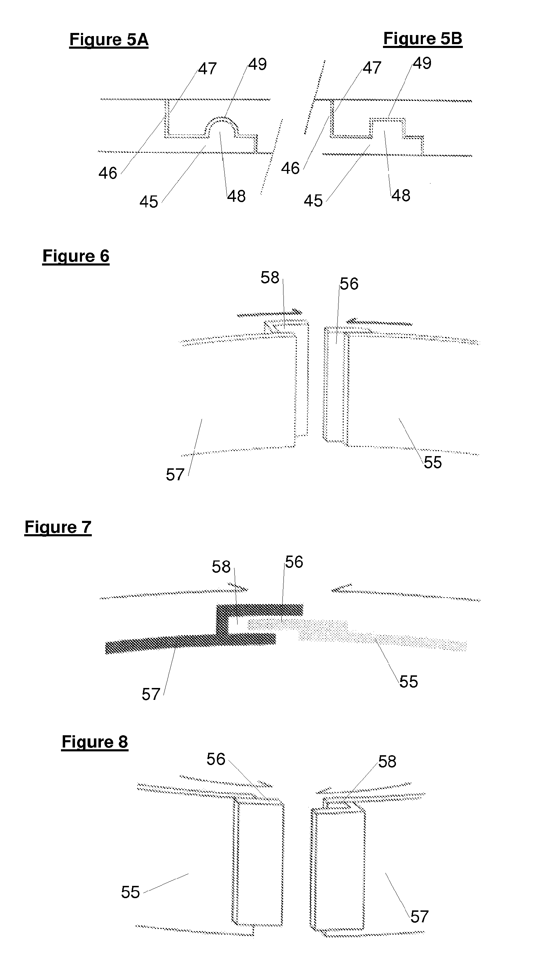

Reinforcing rods 38 are provided between the inner and outer wall portions to improve structural strength. A tongue 40 extends along a first lateral edge of the base section of each segment, but only one is visible. This tongue locates in a complimentary formation (or groove) on an adjacent second lateral edge of another segment. Cross sections through potential tongue and grove interconnections are shown in Figure 5A and 5B. The tongues 40, 45 extend from the first lateral edge 41, 46 of one segment and locate beneath the second lateral edge 24, 47 of the other segment. A ridge 43, 48 extends along the upper surface of the tongues 40, 45 and this locates into a correspondingly shaped groove 44, 49 on the underside of the other segment. As can be seen the shape of the ridge and groove can vary.

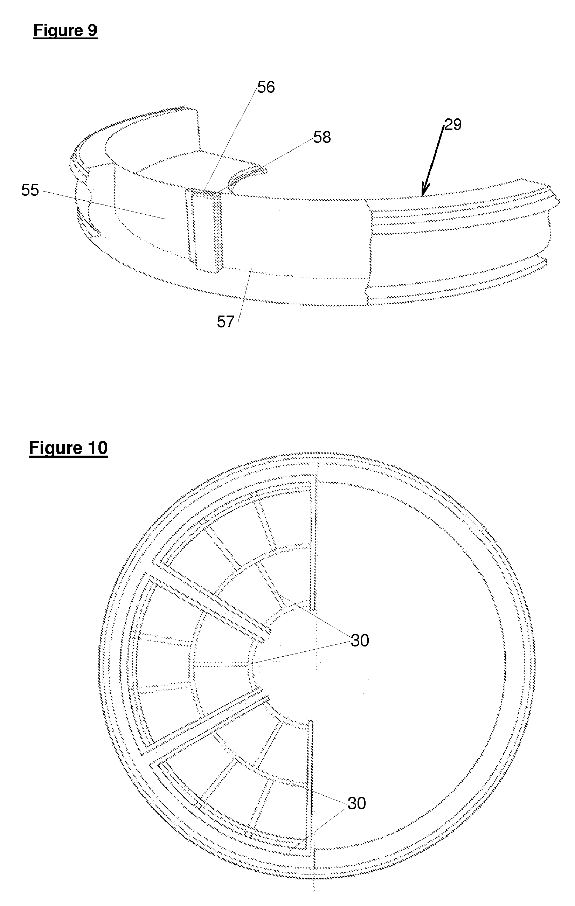

In addition to interconnecting the base parts of the segments it is also desirable to interconnect the inner and outer wall portions, as this improves water retention and strength. Figures 6 to 8 show front, sectional and rear views of an embodiment of interconnection that is suitable. In these figures the interconnection of inner wall portions is shown, but this works just as well for outer wall portions. A first wall portion 55 has on its rear face an elongate tab 56 that runs along one edge. A second wall portion 57 has an elongate channel 58 formed on the rear face and running along an opposed second edge of a different segment. As can be seen best in Figure 7 the tab 56 locates into the channel 58 as the segments are brought together. Figure 9 shows a partially cut away view of a pool that further illustrates this interconnection of inner wall portions.

When a pool is filled with water, there is an outward force on the side walls and base. The interconnections shown in the drawings are adapted such that this force, far from compromising the seal of the joins is used to strengthen them. The overlapping parts are pushed together by the water to minimise or eliminate any leakage through the joins.

Figure 10 shows an underside view of a pool, but with only some detail shown. The underside configuration of three segments 24 is depicted and the arrangement of support ribs 30 can more readily be seen. Such support ribs 30 would normally be located on each segment and so extend around the entire underside.

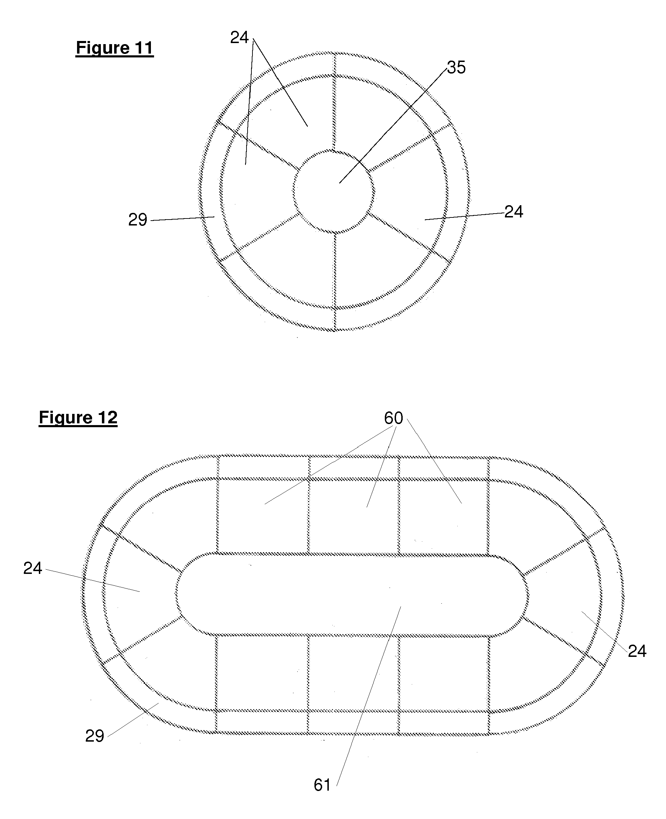

The present invention allows for pools of a great variety of shapes to be formed. By providing a range of standard segment shapes, complex pools may be formed from relatively few segment types. Such segments may be straight, curved or angled. Figure 11 shows a simple plan layout of a round pool, which is formed from six segments 24 that each define an arc of 60° (generally shaped as sectors of a circle in plan view) and a circular hub segment 35. The shape may easily be extended to an oval by the inclusion of straight segments 60 (generally square in plan view) as shown in Figure 12. Six straight segments 60 between three curved ones at each end define a suitable shape and an oval hub segment 61 locates in the centre. Clearly many other shapes can be made with other basic segment shapes.

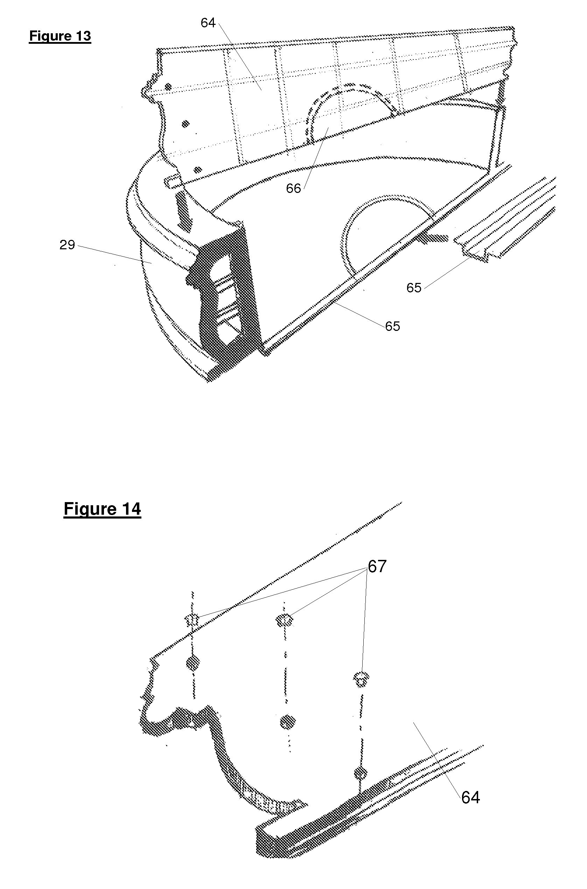

Figure 13 shows the formation of a semi-circular pool. Several segments have been connected to give a semi-circular shape and a back board 64 locates across the open face to complete the pool. The back board's ends are shaped to match the decorative profile of the wall and it may be fixed in place by screws 67 as shown in Figure 14. The lower edge of the back board 64 locates in a gutter 65 running along the free edges of the base portions of the adjacent segments. The gutter 65 may be integral with these segments or may be attached thereto as required. The back board 64 includes an integral hub segment 66, at right angles thereto, that locates as described above in the inner ends of the segments. A simple back board like this one would, once constructed, usually be located up against another structure so would not need to have a decorative outer profile.

The central hub segment need not be flat, but could be raised to provide a pedestal or platform for an external item such as a statue or fountain.

## Claims

1. A modular pool construction kit comprising a plurality of interlocking segments that can be assembled to form a pool of a desired shape, each segment being formed from a laminate material having a fibreglass backing layer to which a composite mixture of resin and stone fragments is bonded.

2. A modular pool construction kit as claimed in claim 1 in which at least some of the segments comprise a base portion and a wall portion, the base portion forming when assembled a part of a bottom of the pool, and the wall portion when assembled forming a part of a side wall of the pool.

3. A modular pool construction kit as claimed in claim 1 or claim 2, in which segments are formed from moulded sheets of the laminate material.

4. A modular pool construction kit as claimed in any of the preceding claims, in which abutting edges of adjacent segments are provided with interconnecting means that permit the segments to be interlocked.

5. A modular pool construction kit as claimed in claim 4, wherein the interconnecting means between adjacent segments form a water resistant seal.

6. A modular pool construction kit as claimed in claim 4 or claim 5, wherein the interconnecting means include tongue and groove connectors on the abutting edges.

7. A modular pool construction kit as claimed in any of claims 2 to 6, in which the wall section has an inner wall part forming the wall of the pool, an outer wall part that defines the external face of the pool and imparts a decorative profile to the pool, and a sill joining the upper edges of the inner and outer wall parts.

8. A modular pool construction kit as claimed in any of the preceding claims in which a central hub segment is provided, which hub segment is adapted to interlock inner parts of the segments.

9. A modular pool construction kit as claimed in claim 8, in which the hub segment has a down-turned lip that engages in channel formed by channel portions on the segments.

10. A method of constructing a pool from a plurality of segments, each segment being formed from a composite material having a fibreglass backing layer with a mixture of resin and stone fragments bonded thereto, the method comprising arranging the segments adjacent each other and interlocking them in the desired shape to form a watertight pool that may be filed with water.

11. A method of constructing a pool as claimed in claim 10, wherein a separate sealant material is provided in the joins between segments to improve water resistance.

12. A method of constructing a pool as claim in any of claims 10 to 11 wherein a selection of segments of different shapes may be used to create pools of varying profile.
